# EUROPÄISCHE PATENTANMELDUNG

(11) **EP 1 022 082 A2**
(43) Veröffentlichungstag der Anmeldung: **26.07.2000**
(21) Anmeldenummer: 99125971.4
(22) Anmeldetag: 27.12.1999
(51) Int. Cl.: B23F 19/10

(54) **Verfahren und Vorrichtung zum Anfassen der Stirnkanten der Zahnnuten verzahnter Werkstücke**

(30) Priorität: 20.01.1999 DE 19902035
(71) Anmelder: WERA WERK HERMANN WERNER GMBH & CO., 42349 Wuppertal (DE)
(72) Erfinder: Heym, Hans Udo, 42327 Wuppertal (DE)
(74) Vertreter: Grundmann, Dirk, Dr.

(57) **Zusammenfassung**

Die Erfindung betrifft ein einfach durchzuführendes Verfahren und eine Vorrichtung zur Durchführung des Verfahrens zum Anfasen der Stirnkanten der Zahnnuten (14) verzahnter Werkstücke (2), bei dem die Werkzeugdrehachse (y) mit einem festen Radialabstand (R) zur Werkstückdrehachse (x) und mit einem festen Axialabstand (A) zur Werkstückstirnseite (18) in konstantem Drehzahlbehältnis zum kontinuierlich drehangetriebenen Werkstück (2) betrieben wird, wobei eine auf der Werkzeugachse (4) sitzende Messerplatte (9) Schneiden (10,11,12) ausbildet zum
a. Anfasen der Nutenfußkante (17) mit einem vorbestimmten Fußfasenwinkel (Alpha),
b. Anfasen einer ersten Nutflankenkante (15) mit einem vorbestimmten Flankenfasenwinkel (Beta) und
c. Anfasen einer zweiten, der ersten gegenüberliegenden Nutflankenkante (16) mit einem vorbestimmten Flankenfasenwinkel (Gamma),
wobei der Radialabstand (R) kleiner ist als die Summe aus Flugkreisradius (F) und Nutfußradius (N) und wobei zur Erzielung eines vorbestimmten, insbesondere beidseitig gleichgroßen Flankenfasenwinkels (Beta,Gamma) die Werkzeugdrehachse (y) um einen in einer parallel zur Werkstückdrehachse (x) sich erstreckenden Ebene liegenden Schwenkwinkel (Delta) verschwenkt ist zu der Umlaufebene des Werkstückes (2).

## Beschreibung

Nach dem Verzahnen entsprechender zahnradartiger Werkstücke sind die Stirnkanten der Zahnnuten scharfkantig, insbesondere an der Stirnseite, an welcher das Fräswerkzeug austritt. Es kann dort sogar noch ein Grat vorliegen. Die Entfernung desselben bzw. die Scharfkantigkeit der Stirnkanten der Zahnnuten erfolgt in der Regel in Handarbeit verbunden mit erhöhten Kosten entsprechend verzahnter Werkstücke.

Der Erfindung liegt die Aufgabe zugrunde, ein einfach durchzuführendes Verfahren zum Entgraten der Stirnkanten der Zahnnuten zahnradartiger Werkstücke sowie eine Vorrichtung zur Durchführung des Verfahrens von an sich bekanntem bewährten Aufbau anzugeben.

Diese Aufgabe ist zunächst und im wesentlichen bei einem Verfahren zum Anfasen der Stirnkanten der Zahnnuten verzahnter Werkstücke gelöst, bei dem die Werkzeugdrehachse mit einem festen Radialabstand zur Werkstückdrehachse und mit einem festen Axialabstand zur Werkstückstirnseite in konstantem Drehzahlverhältnis zum kontinuierlich drehangetriebenen Werkstück betrieben wird, wobei eine auf der Werkzeugachse sitzende Messerplatte Schneiden ausbildet zum
a) Anfasen der Nutenfußkante mit einem vorbestimmten Fußfasenwinkel,
b) Anfasen einer ersten Nutflankenkante mit einem vorbestimmten Flankenfasenwinkel und
c) Anfasen einer zweiten, der ersten gegenüberliegenden Nutflankenkante mit einem vorbestimmten Flankenfasenwinkel,
wobei der Radialabstand kleiner ist als die Summe aus Flugkreisradius und Nutfußradius und wobei zur Erzielung eines vorbestimmten, insbesondere beidseitig gleichgroßen Flankenfasenwinkels die Werkzeugdrehachse um einen in einer parallel zur Werkstückdrehachse sich erstreckenden Ebene liegenden Schwenkwinkel verschwenkt ist zu der Umlaufebene des Werkstückes.

Zufolge derartiger Ausgestaltung ist ein Verfahren angegeben, mittels welchem kurzfristig und kostensparend das Anfasen der Stirnkanten der Zahnnuten verzahnter Werkstücke durchführbar ist. Durchgeführt werden kann das Verfahren auf solchen Werkzeugmaschinen, welche nach dem Schlagmesserverfahren arbeiten. Mit einer einzigen, die Schneiden ausbildenden Messerplatte können die Nutfußkanten, die ersten Nutflankenkanten sowie die zweiten Nutflankenkanten mit einem vorbestimmten Flankenwinkel angefast werden. Verletzungen an den angefasten Kanten sind daher mit Sicherheit eliminiert. Im Gegensatz zur normalen Einzahn-Schlagmesserbearbeitung ist nun der Radialabstand kleiner als die Summe aus Flugkreisradius und Nutfußradius. Dieser Radialabstand bestimmt den Fußfasenwinkel. Zur Erzeugung beidseitig gleichgroßer Fasenwinkel dient die Verschwenkung der Werkzeugdrehachse zur Umlaufebene des Werkstückes. Hierdurch wird der sich durch das Freischneiden während des Werkzeugeingriffes sich ergebende Schnittfehler kompensiert. Auf diese Weise erhält man an jeder Nutflankenkante weitgehend parallel verlaufende Fasenkanten. Wird ein konstantes Drehzahlverhältnis von Werkstück und Werkzeug gewählt, welches einen größeren Freischnitt bewirkt, so kann das Anfasen mit einem Werkzeug geschehen, welches auf den Nutquerschnitt abgestimmt ist. Optimal erweist es sich jedoch, daß die Schneiden eine Fläche umfassen, die größer ist als der Nutquerschnitt, so daß mit günstigem Drehzahlverhältnis und mit der besten Schneidwirkung gearbeitet werden kann. Die Vorrichtung zur Durchführung des Verfahrens zeichnet sich durch eine mit konstanter Drehzahl drehangetriebene Werkstückachse und synchron dazu laufender, windschief dazu angeordneter Werkzeugachse aus, wobei eine auf der Werkzeugachse sitzende Messerplatte Schneiden ausbildet. Diese dienen zum Anfasen der entsprechenden Stirnkanten der Zahnnuten. Die Vorrichtung ist so aufgebaut, daß sich der Radialabstand auf einen Wert einstellen läßt, welcher kleiner ist als die Summe aus Flugkreisradius und Nutfußradius. Ferner ist an der Vorrichtung vorgesehen, daß die Werkzeugdrehachse um einen in einer parallel zur Werkstückdrehachse sich erstreckenden Ebene liegenden Schwenkwinkel verschwenkbar ist zu der Umlaufebene des Werkstückes. Der Schwenkwinkel ist so groß zu wählen, daß beidseitig gleichgroße Flankenfasenwinkel an den einander zugewandten Nutflankenkanten entsteht. Eingesetzt wird dabei eine Schneide, deren Schneidenkontur eine maßstabsgetreue Vergrößerung des Nutquerschnitts ist. Es liegt also eine Ähnlichkeit zwischen der Schneidenkontur und des Nutquerschnitts vor.

Nachstehend wird ein Ausführungsbeispiel der Erfindung anhand der Zeichnungen erläutert. Es zeigt:
- Fig. 1: eine Teilansicht einer erfindungsgemäß gestalteten Vorrichtung,
- Fig. 2: in perspektivischer Darstellung ein als umfangsverzahntes Zahnrad ausgestaltetes Werkstück mit zugehörigem Werkzeug, dessen Messerplatte in Eingriff steht mit einer Zahnnut,
- Fig. 3: Werkstück und Werkzeug in Einzeldarstellung gemäß der Position in Fig. 1, jedoch bei geschwenkter Werkzeugdrehachse,
- Fig. 4: den Schnitt nach der Linie IV-IV in Fig. 3,

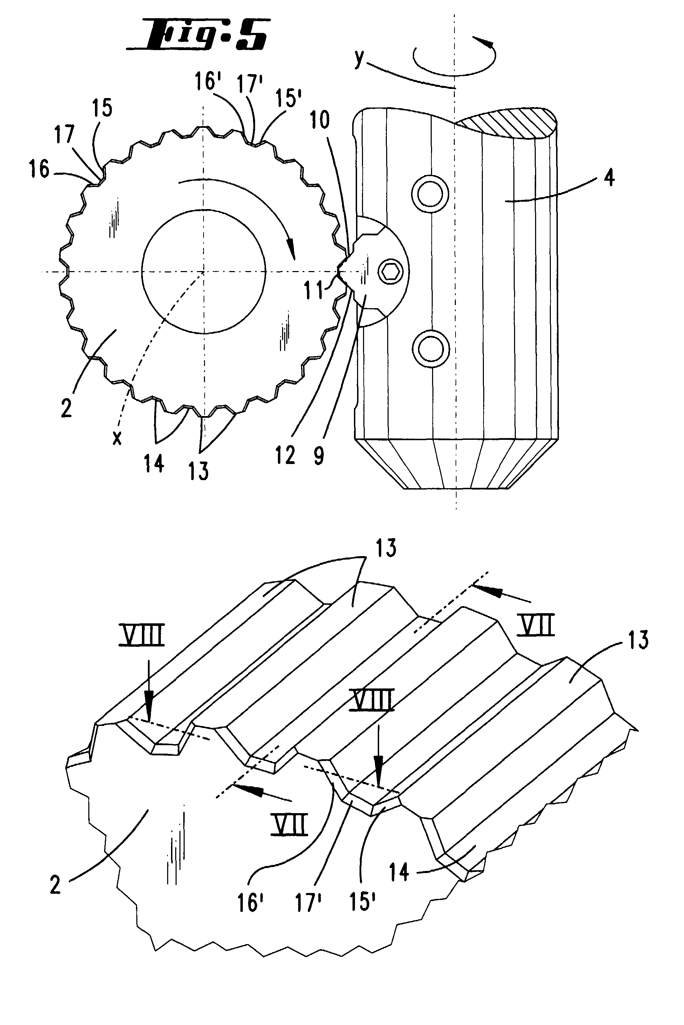

- Fig. 5: die Ansicht in Pfeilrichtung V in Fig. 3,
- Fig. 6: in perspektivischer Vergrößerung einen Zahnausschnitt,

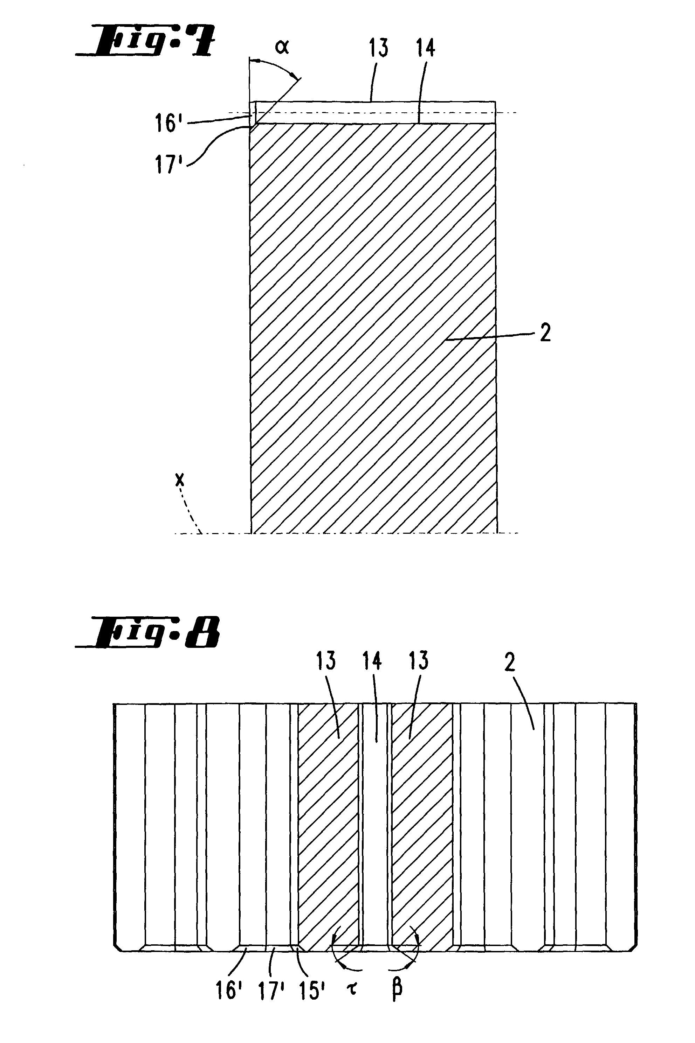

- Fig. 7: den Schnitt nach der Linie VII-VII in Fig. 6 und
- Fig. 8: den Schnitt nach der Linie VIII-VIII in Fig. 6.

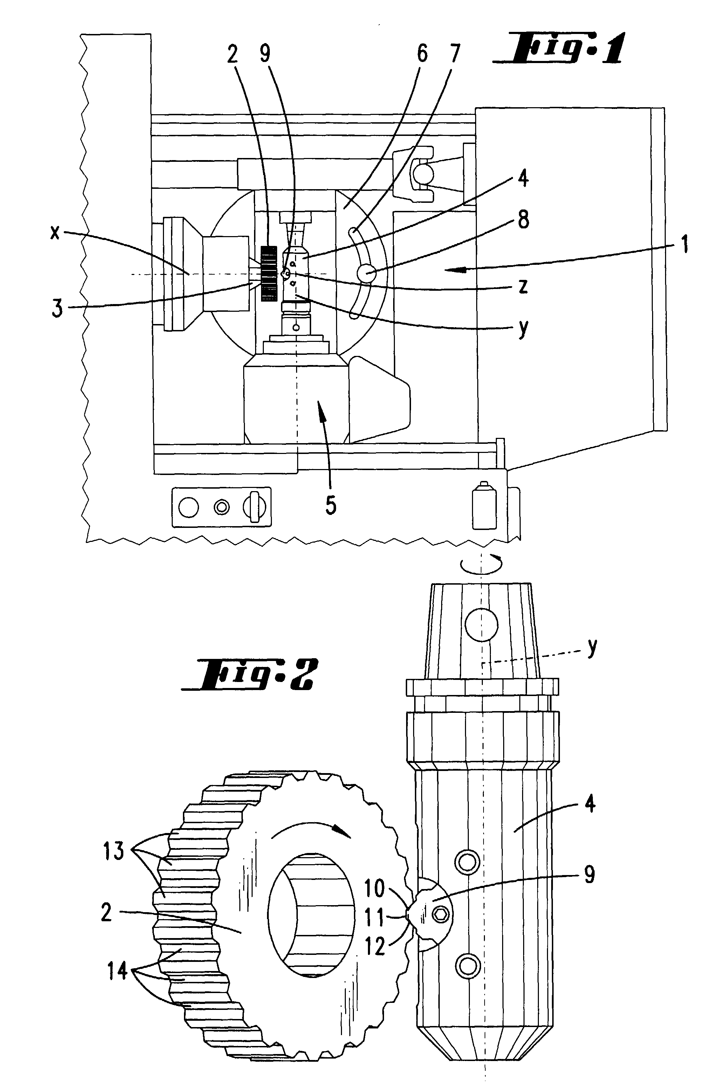

Die in Fig. 1 als Ganzes mit der Ziffer 1 bezeichnete Vorrichtung ist Bestandteil einer Werkzeugmaschine. Zur Aufnahme eines verzahnten Werkstückes 2 dient ein von einer nicht veranschaulichten, angetriebenen Werkstückspindel getragenes Spannfutter 3. Beim Ausführungsbeispiel ist die Werkstückdrehachse x horizontal ausgerichtet. Windschief zu dieser ist eine in Form einer Welle gestaltete Werkzeugachse 4 angeordnet. Deren Werkzeugdrehachse ist mit y bezeichnet. Getragen ist die Werkzeugachse 4 von einem Werkzeugträger 5, welch letzterer um eine senkrecht zur Werkstückdrehachse x liegende Werkzeugträgerachse z schwenkbar angeordnet ist. Der Werkzeugträger 5 weist hierzu eine Flanschplatte 6 auf. In letzterer ist ein konzentrisch zur Achse z verlaufender Bogenschlitz 7 vorgesehen. Eine Spannschraube 8 durchsetzt den Bogenschlitz 7. Nach Lösen der Spannschraube 8 ist es möglich, den Werkzeugträger 5 um die Achse z zu schwenken. Danach ist die Spannschraube 8 wieder in ihre Spannstellung zu bringen. Der Antrieb der Werkzeugachse 4 erfolgt über ein nicht veranschaulichtes Getriebe. Auch für die das Spannfutter 3 tragende Werkstückspindel ist ein Getriebe vorgesehen. Die Drehzahlen der Werkzeugachse 4 und der das Spannfutter 3 tragenden Werkstückspindel stehen dabei in einem konstanten Verhältnis.

Die Werkzeugachse 4 ist Träger einer Messerplatte 9, welche eine U-Form ausbildende Schneiden 10, 11, 12 aufweist. Die Schneidenkontur ist dabei eine maßstabsgetreue Vergrößerung des Nutquerschnitts der jeweils beidseitig von Zähnen 13 flankierten Zahnnuten 14. Das bedeutet, daß die Form des in Schneideingriff gelangenden Bereiches der Messerplatte 9 ähnlich dem Grundriß der Zahnnut 14 ist.

Die eingangs beschriebene Vorrichtung dient zum Anfasen der Stirnkanten der Zahnnuten 14. Bezüglich der Stirnkanten handelt es sich dabei um eine erste Nutflankenkante 15 und eine dieser gegenüberliegenden zweite Nutflankenkante 16, zwischen welchen sich die Nutenfußkante 17 erstreckt.

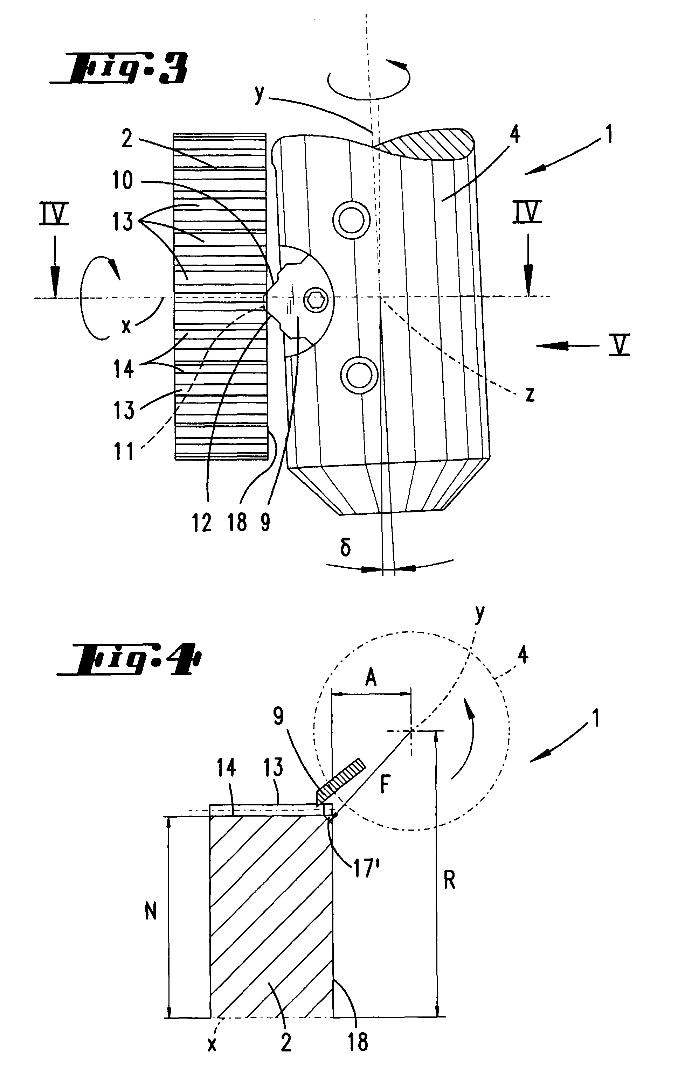

Vor dem Erzeugen dieser Kanten 15,16,17 werden solche geometrischen Verhältnisse zwischen Werkstück 2 und Werkzeug hergestellt, daß die Werkzeugdrehachse y mit einem festen Radialabstand R zur Werkstückdrehachse x liegt. Ferner wird ein fester Axialabstand A zwischen Werkzeugdrehachse y und der Werkstückstirnseite 18 realisiert. Figur 4 veranschaulicht, daß der Radialabstand R kleiner ist als die Summe aus Flugkreisradius F und Nutfußradius N. Beim konventionellen Herstellen von Nuten mittels eines Einzahn-Schlagmessers dagegen ist der Radialabstand so groß wie der Flugkreisradius plus Nutfußradius. Durch den Radialabstand R wird der Fußfasenwinkel Alpha bestimmt. Zwecks Erzielung beidseitig gleichgroßer Flankenfasenwinkels Beta und Gamma kann der Werkzeugträger 5 mit der Werkzeugachse 4 um die Achse z um einen Schwenkwinkel Delta verschwenkt werden. Das bedeutet, daß die Werkzeugdrehachse y dann um einen in einer parallel zur Werkstückdrehachse x sich erstreckenden Ebene liegenden Schwenkwinkel Delta verschwenkt ist zu der in Figur 3 angedeuteten Umlaufebene des Werkstückes 2. Gemäß Figur 3 ist die Umlaufebene des Werkstückes 2 durch die Werkstückträger-Schwenkachse z gelegt. Nach dem Aufspannen des Werkstückes 2 und entsprechender Ausrichtung der Werkzeugachse 4 werden daher bei Antrieb des Werkstückes 2 als auch der Werkzeugachse 4 mittels der Schneiden 10,11,12 an den Kanten 15,16,17 Anfasungen 15',16',17' erzeugt mit entsprechendem Fasenwinkel Alpha, Beta, Gamma. Auf diese Weise werden scharfe Kanten sowie ein eventuell vorliegender Grat mit Sicherheit beseitigt. Das Bearbeiten entsprechend verzahnter Werkstücke läßt sich kostensparend und schnell auf vorhandenen, entsprechend getalteten Vorrichtungen vornehmen. Dem Nutquerschnitt sind lediglich entsprechend figurierte Messerplatten zuzuordnen.

Wie die Zeichnungen veranschaulichen, verlaufen die durch die Anfasungen 15',16' gebildeten Kanten jeder Nutseitenflanke parallel zueinander.

Beim Ausführungsbeispiel ist veranschaulicht, daß ein außenverzahntes Zahnrad bearbeitet wird. Ebenso ist es möglich, innenverzahnte Werkstücke nach dem erfindungsgemäßen Verfahren und der erfindungsgemäßen Vorrichtung zu behandeln.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Verfahren zum Anfasen der Stirnkanten der Zahnnuten (14) verzahnter Werkstücke (2), bei dem die Werkzeugdrehachse (y) mit einem festen Radialabstand (R) zur Werkstückdrehachse (x) und mit einem festen Axialabstand (A) zur Werkstückstirnseite (18) in konstantem Drehzahlbehältnis zum kontinuierlich drehangetriebenen Werkstück (2) betrieben wird, wobei eine auf der Werkzeugachse (4) sitzende Messerplatte (9) Schneiden (10,11,112) ausbildet zum
a. Anfasen der Nutenfußkante (17) mit einem vorbestimmten Fußfasenwinkel (Alpha),
b. Anfasen einer ersten Nutflankenkante (15) mit einem vorbestimmten Flankenfasenwinkel (Beta) und
c. Anfasen einer zweiten, der ersten gegenüberliegenden Nutflankenkante (16) mit einem vorbestimmten Flankenfasenwinkel (Gamma),
wobei der Radialabstand (R) kleiner ist als die Summe aus Flugkreisradius (F) und Nutfußradius (N) und wobei zur Erzielung eines vorbestimmten, insbesondere beidseitig gleichgroßen Flankenfasenwinkels (Beta, Gamma) die Werkzeugdrehachse (y) um einen in einer parallel zur Werkstückdrehachse (x) sich erstreckenden Ebene liegenden Schwenkwinkel (Delta) verschwenkt ist zu der Umlaufebene des Werkstückes (2).

2. Verfahren nach Anspruch 2 oder insbesondere danach, dadurch gekennzeichnet, daß die Schneiden (10,11,12) eine Fläche umfassen, die größer ist als der Nutquerschnitt.

3. Vorrichtung zur Durchführung des Verfahrens nach einem oder mehreren der vorhergehenden Ansprüche, mit konstanter Drehzahl drehangetriebener Werkstückachse und synchron dazu laufender, windschief dazu angeordneter Werkzeugachse (4) wobei eine auf der Werkzeugachse (4) sitzende Messerplatte (9) Schneiden (10,11,12) ausbildet zum
a. Anfasen der Nutenfußkante (17) mit einem vorbestimmten Fußfasenwinkel (Alpha),
b. Anfasen einer ersten Nutflankenkante (15) mit einem vorbestimmten Flankenfasenwinkel (Beta) und
c. Anfasen einer zweiten, der ersten gegenüberliegenden Nutflankenkante (16) mit einem vorbestimmten Flankenfasenwinkel (Gamma),
wobei der Radialabstand (R) kleiner ist als die Summe aus Flugkreisradius (F) und Nutfußradius (N) und wobei zur Erzielung eines vorbestimmten, insbesondere beidseitig gleichgroßen Flankenfasenwinkels (Beta, Gamma) die Werkzeugdrehachse (y) um einen in einer parallel zur Werkstückdrehachse (x) sich erstreckenden Ebene liegenden Schwenkwinkel (Delta) verschwenkt ist zu der Umlaufebene des Werkstückes (2).

4. Vorrichtung nach Anspruch 3 oder insbesondere danach, dadurch gekennzeichnet, daß die Schneidenkontur eine maßstabsgetreue Vergrößerung des Nutquerschnitts ist.
